# FASCICULE DE BREVET EUROPEEN

(11) **EP 0 452 199 B1**
(45) Date de publication et mention de la délivrance du brevet: **22.03.1995**
(21) Numéro de dépôt: 91400924.6
(22) Date de dépôt: 05.04.1991
(51) Int. Cl.: C04B 35/52, C04B 35/80

(54) **Procédé de conformation de préformes pour la fabrication de pièces en matériau composite thermostructural, notamment de pièces en forme de voiles ou panneaux**
Verfahren zur Verfestigung von Vorformen zur Herstellung von hitzebeständigen Verbundwerkstoffteilen, insbesondere von Teilen in Form von Segeln oder Platten
Method of strengthening preforms for the fabrication of heat resistant composite material parts, in particular parts in the shape of sails or panels

(30) Priorité: 09.04.1990 FR 9004535
(43) Date de publication de la demande: 16.10.1991
(73) Titulaire: SOCIETE EUROPEENNE DE PROPULSION, 92150 Suresnes (FR)
(72) Inventeur: Vives, Michel, F-33320 Eysines (FR); Limousin, Jean-Louis, F-33290 Le Pian Medoc (FR)
(74) Mandataire: Joly, Jean-Jacques

(56) Documents cités:
- CH-A- 436 092
- GB-A- 1 549 687
- GB-A- 1 549 687

## Description

La présente invention concerne la fabrication de pièces en matériau composite thermostructural, et plus particulièrement de pièces en forme de voiles ou panneaux, réalisées par densification d'une préforme fibreuse par une matrice obtenue par infiltration chimique en phase vapeur au sein de la porosité de la préforme.

Par matériaux composites thermostructuraux, on entend ici des matériaux qui présentent des propriétés mécaniques appropriées pour constituer des éléments de structure, et qui conservent ces propriétés à des températures élevées. Des exemples typiques de tels matériaux sont les composites carbone-carbone (C-C) constitués par une préforme à base de fibres de carbone densifiée par une matrice en carbone, et les composites à matrice céramique (CMC) constitués par une préforme à base de fibres réfractaires (fibres de carbone ou fibres céramiques) densifiée par une matrice céramique. Dans un CMC, un matériau céramique couramment utilisé pour la matrice et, le cas échéant, les fibres du renfort, est le carbure de silicium.

Les processus d'infiltration chimique en phase vapeur de carbone et de carbure de silicium sont bien connus. Ils sont notamment décrits dans les documents US-A-3 895 084 et FR-A-2 401 888.

La préforme fibreuse, qui constitue le renfort du matériau composite, peut être élaborée à partir de textures fibreuses diverses, notamment des feutres, tissus ou nappes de fils. Ces textures peuvent être disposées en strates qui sont éventuellement liées entre elles par aiguilletage ou par implantation de fils, selon des techniques bien connues.

En vue de sa densification, la préforme fibreuse est placée dans un outillage, généralement en graphite. L'outillage a pour fonction de maintenir la préforme fibreuse dans la forme voulue, correspondant à celle de la pièce à réaliser, et, le cas échéant, de réaliser un compactage de la préforme afin d'obtenir un taux volumique de fibres souhaité (fraction du volume apparent de la préforme effectivement occupée par les fibres).

L'infiltration chimique en phase vapeur du matériau constitutif de la matrice est dans un premier temps réalisée jusqu'à atteindre un degré de densification suffisant pour consolider la préforme, c'est-à-dire pour obtenir une liaison entre les fibres suffisante pour que la préforme conserve sa forme sans l'aide de l'outillage et puisse être manipulée. La préforme consolidée peut alors être retirée de l'outillage avant de poursuivre l'infiltration chimique en phase vapeur jusqu'à atteindre le degré de densification souhaité.

La réalisation de pièces en forme de voiles ou de panneaux de dimensions relativement grandes pose des problèmes au stade de la consolidation.

En effet, les dimensions des pièces, leur épaisseur relativement faible, ainsi que la nécessité d'intégrer de nombreux raidisseurs font que des outillages en graphite particulièrement complexes doivent être utilisés.

Ces outillages sont constitués de nombreuses pièces, d'une part pour couvrir la surface de la préforme, afin de maintenir celle-ci en forme et d'obtenir le degré de compactage souhaité, et, d'autre part, pour maintenir les raidisseurs sur le voile. En effet, l'intégration des raidisseurs est réalisée au stade de la densification. Les raidisseurs sont eux-mêmes prédensifiés, ou consolidés, et la liaison avec le reste de la pièce est obtenue par co-densification, le matériau constitutif de la matrice réalisant un "collage" des raidisseurs sur le panneau ou voile du fait de la continuité de la matrice aux interfaces entre ces pièces.

Les outillages sont longs et coûteux à réaliser et leur montage est complexe. Or, au cours de la densification, il se forme sur les outillages un dépôt du matériau constitutif de la matrice de la pièce composite réalisée. Les outillages doivent alors être rénovés avant chaque nouvelle utilisation. Il n'est pas possible de faire subir de nombreuses rénovations à un même outillage sans modifier ses dimensions, voire même l'endommager, au point de le rendre inutilisable. Par conséquent, les outillages doivent en pratique être rebutés au bout de quelques utilisations seulement, ce qui augmente sensiblement le coût des pièces composites fabriquées.

Enfin, au cours de la densification, une partie des outillages masque la préforme, en dépit des trous dont ils sont habituellement munis. Ce masquage gêne l'accès du mélange gazeux d'infiltration à la porosité de la préforme et se traduit par une densification non uniforme.

Aussi, l'invention a pour but de fournir un procédé permettant la conformation de préformes avec un outillage simplifié, en particulier pour la fabrication de pièces en forme de voiles ou panneaux et y compris lorsque des raidisseurs sont intégrés.

Ce but est atteint du fait que, conformément à l'invention, la conformation de la préforme est réalisée par liage de celle-ci sur un conformateur rigide au moyen de fils traversant la préforme et passant à travers des trous du conformateur.

Ainsi, l'outillage rigide est limité au conformateur sur lequel la préforme est appliquée par l'une de ses faces. Le maintien en forme et le compactage de la préforme sont assurés par liage (ou couture) de celle-ci sur le conformateur.

Les fils utilisés pour le liage sont de préférence des fils en carbone ou en céramique qui conservent leur intégrité pendant toute la phase d'infiltration chimique en phase vapeur.

Après densification, ou après au moins consolidation de la préforme, celle-ci est retirée du conformateur par rupture des fils de liage. Ceux-ci restent implantés à travers la pièce obtenue et constituent un renfort supplémentaire, en particulier en procurant une résistance accrue au cisaillement interlaminaire (c'est-à-dire parallèlement aux faces de la pièce).

Avantageusement, avant liage, une strate de recouvrement est disposée sur la face de la préforme opposée à celle tournée vers le conformateur.

La strate de recouvrement est en un matériau bidimensionnel fibreux, tel qu'un tissu à armure toile ou satin réalisé à partir de fibres réfractaires. La fonction de la strate de recouvrement est de répartir à la surface de la préforme l'effort de compactage produit par les fils de liage.

La texture constituant la strate de recouvrement est suffisamment aérée afin de laisser un accès régulier et aisé au flux gazeux pour l'infiltration de la préforme.

La strate de recouvrement peut être en un matériau ayant un coefficient de dilatation différent de celui du matériau constitutif de la préforme. La densification par infiltration chimique en phase vapeur étant réalisée à une température relativement élevée, la différence de dilatation entre la strate de recouvrement et la préforme se traduit, pendant la phase de refroidissement qui suit l'infiltration, par des ruptures au niveau des zones d'interface entre préforme et strate de recouvrement co-infiltrées par la matrice. En fin de phase de consolidation de la préforme, la strate de recouvrement peut donc être facilement séparée de la préforme. La suppression de la strate de recouvrement élimine le dépôt de surface qui se fait en grande partie sur celle-ci. Par conséquent, la porosité à coeur de la préforme est aisément accessible pour la poursuite de la densification, sans qu'il soit nécessaire de procéder à un écroûtage de la préforme. En outre, on obtient un état de surface homogène et régulier.

Avantageusement encore, l'intégration d'éléments à la préforme est réalisée au moyen des fils de liage qui relient ces éléments à la préforme.

Ainsi, dans le cas par exemple de voiles ou panneaux munis de raidisseurs intégrés, la liaison entre les raidisseurs et le voile ou panneau obtenue par co-densification est avantageusement renforcée par les fils de liage.

L'invention sera mieux comprise à la lecture de la description faite ci-après, à titre indicatif mais non limitatif, en référence aux dessins annexés sur lesquels :
- la figure 1 est une vue schématique partielle illustrant un mode de mise en oeuvre du procédé selon l'invention pour la conformation d'une préforme fibreuse en vue de la fabrication d'un panneau de structure en matériau composite avec raidisseurs intégrés ;
- la figure 2 illustre un aute mode de mise en oeuvre du procédé selon l'invention ;
- la figure 3 est une vue de détail à échelle agrandie illustrant le réglage de la tension des fils de liage de la préforme dans le cas de la figure 2 ; et
- la figure 4 illustre un mode de mise en place de fils de liage lors de la mise en oeuvre du procédé selon l'invention.

Un mode de mise en oeuvre du procédé conforme à l'invention sera maintenant décrit dans le cadre de l'application de ce procédé à la fabrication d'une pièce de structure en forme de panneau de dimensions relativement grandes muni de raidisseurs intégrés et réalisé en un matériau composite thermostructural. Un tel panneau est notamment utilisable comme élément de structure d'un engin ou d'un avion spatial exposé à des températures élevées en service.

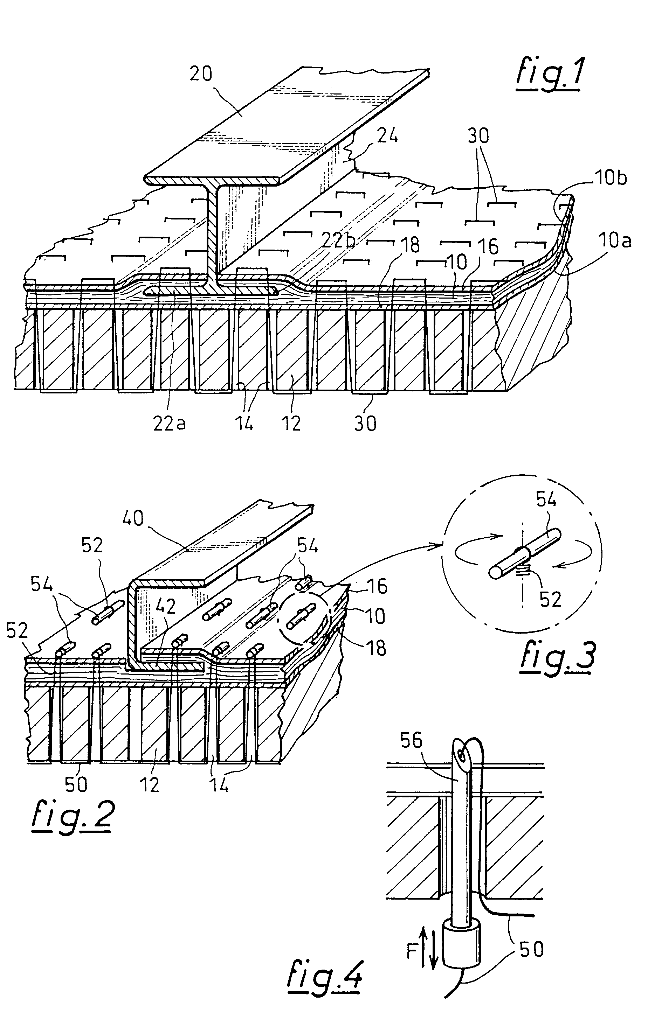

Une préforme 10 du panneau (figure 1) est réalisée par empilement de strates de texture à base de fibres réfractaires (carbone ou céramique). Les strates sont constituées par exemple par des couches de tissus ou de feutres, par des nappes de fils, ou par des complexes constitués d'une couche de tissu ou d'une nappe de fils pré-aiguilletée avec un voile de fibres. Les strates peuvent être liées entre elles par aiguilletage.

La préforme 10 est appliquée par une de ses faces 10a sur un conformateur rigide 12, constituant un élément d'outillage, dont la forme correspond à celle du panneau à réaliser. Le conformateur 12 est réalisé en graphite et est percé d'une multitude de trous 14 destinés à permettre l'accès à la face 10a de la préforme au flux gazeux d'infiltration, lors de la densification.

La face 10b de la préforme 10 opposée à la face 10a est munie d'une strate de recouvrement 16 constituée par exemple par une couche de tissu relativement aéré à armure toile ou satin. La strate de recouvrement 16 est de préférence réalisée en un matériau ayant un coefficient de dilatation différent de celui du matériau constitutif de la préforme. Ainsi, lorsque la préforme 10 est à base de fibres céramiques, la strate 16 peut être en un tissu à base de fibres de carbone. Par contre, lorsque la préforme 10 est à base de fibres de carbone, la strate 16 peut être en un tissu à base de fibres céramiques, par exemple un tissu à base de fibres en carbure de silicium, ou un tissu à base de fibres de carbone modifié par dépôt sur les fibres d'un matériau céramique, par exemple du carbure de silicium.

Plusieurs raidisseurs 20 (un seul est représenté sur la figure 1) peuvent être intégrés à la préforme 10. Dans l'exemple illustré, chaque raidisseur a une forme de profilé à section transversale en I prenant appui par une de ses bases 22 sur la préforme 10.

Les raidisseurs 20 sont constitués par une texture de renfort fibreuse, de même nature que la préforme 10, éventuellement prédensifiée (consolidée) par une matrice de préférence identique à celle du panneau à réaliser. Les raidisseurs 20 ainsi consolidés peuvent être manipulés, leur densification étant achevée lors de la densification de la préforme 10.

Comme le montre la figure 1, l'intégration du raidisseur 20 est réalisée en insérant les ailes 22a, 22b de sa base 20 au sein des strates constitutives de la préforme 10. A cet effet, celle-ci est incisée sur une partie de son épaisseur à l'emplacement du raidisseur afin de pouvoir loger les ailes 22a, 22b entre deux strates de la préforme. De la sorte, chaque aile 22a, 22b est recouverte par une partie de la préforme 10 qui s'étend jusqu'à l'âme 24 du raidisseur. De même, la strate de recouvrement 16 est interrompue au niveau du raidisseur 20 et s'étend au-dessus des ailes de celui-ci, jusqu'à son âme 24.

Le maintien de la préforme 10 sur le conformateur 12 est assuré par liage au moyen de fils 30 qui traversent la strate de recouvrement 16 et la préforme 10 et passent à travers les trous 14 du conformateur, ou au moins une partie de ceux-ci. Dans l'exemple illustré par la figure 1, les fils forment des lignes de couture en passant alternativement d'un côté et de l'autre de l'ensemble formé par le conformateur 12, la préforme 10 et la strate de recouvrement 16.

En outre, au niveau des raidisseurs 20, les fils 30 peuvent traverser les ailes 22a, 22b de ceux-ci et assurer par conséquent la liaison des raidisseurs avec la préforme. Il en est ainsi lorsque la préforme du raidisseur n'a pas été prédensifiée - ou consolidée - ou que la prédensification a été suffisamment limitée pour ne pas gêner l'implantation de fils de liage. En l'absence de prédensification des préformes des raidisseurs, il est bien entendu nécessaire de prévoir un outillage de maintien de ces préformes sur la préforme 10 du panneau. Cet outillage (non représenté) est considérablement simplifié par rapport à celui qui serait nécessaire pour maintenir en forme à la fois les préformes des raidisseurs et la préforme du panneau; il est retiré dès consolidation des préformes des raidisseurs.

Les fils 30 sont en un matériau réfractaire tel que le carbone ou un matériau céramique afin de conserver leur intégrité lors de la phase de densification.

La couture par les fils 30 force la préforme 10 à épouser la forme du conformateur 12, donc donne à la préforme la forme voulue. De plus, en exerçant une tension sur les fils 30, il est possible de compacter la préforme 10. La strate de recouvrement 16 contribue à répartir les efforts exercés par les fils de liage afin de réaliser un compactage uniforme.

L'ensemble est ensuite introduit dans un four d'infiltration afin de réaliser la densification par infiltration chimique en phase vapeur. Dans le cas où la matrice est un matériau céramique, tel que du carbure de silicium, il est avantageux de former sur les fibres un dépôt intermédiaire de pyrocarbone ou de nitrure de bore obtenu par infiltration chimique en phase vapeur, comme décrit dans le document US-A-4 752 503.

Lorsque la préforme 10 a été consolidée, l'infiltration peut être interrompue afin de séparer la prèforme du conformateur 12 et d'éliminer la strate de recouvrement 16. A cet effet, les fils de liage 30 sont d'abord rompus à l'arrière du conformateur. Le cas échéant, l'outillage de maintien des préformes des raidisseurs est également retiré.

Comme indiqué plus haut, la différence entre les coefficients de dilatation des matériaux constituant la préforme 10 et la strate 16 facilite l'élimination de cette dernière. Se trouve en même temps éliminé le dépôt de surface sur la strate 16, ce qui rend inutile un éventuel écroûtage de la face 10b de la préforme. La strate 16 est "pelée" au moyen d'un outil en brisant en même temps les fils de liage.

On notera qu'une strate d'interposition 18, de nature par exemple identique à celle de la strate de recouvrement 16, peut être disposée entre le conformateur 12 et la préforme 10, cette strate 18 étant traversée par les fils de liage 30. Les ruptures aux interfaces entre la strate 18 et la préforme 10 et entre la strate 18 et le conformateur 12 facilitent le démoulage de la préforme 10 et l'élimination de la strate 18. Le dépôt de surface formé sur la strate 18 est par là même éliminé, rendant inutile un écroûtage éventuel de la face 10a de la préforme. L'utilisation de strates d'interposition afin de faciliter la séparation entre une préforme densifiée et un outillage est décrite dans la demande de brevet français n^{o} 89 15929.

La co-densification de l'ensemble constitué par la préforme 10 et les raidisseurs 20 peut ensuite être poursuivie jusqu'à ce que le degré de densification souhaité soit atteint. Les tronçons de fils de liage laissés en place contribuent à l'augmentation de la résistance du panneau au cisaillement interlaminaire.

La figure 2 illustre une variante de mise en oeuvre du procédé selon l'invention, également pour réaliser un panneau muni de raidisseurs intégrés.

On retrouve, sur la figure 2, la préforme 10 disposée sur le conformateur 12 préalablement recouvert de la strate d'interposition 18, ainsi que la strate de recouvrement 16 disposée sur la préforme 10.

Dans cet exemple, les raidisseurs 40 (un seul est représenté sur la figure 2) sont constitués par des profilés à section transversale en C. Les raidisseurs sont constitués par des textures de renfort fibreuses éventuellement partiellement densifiées (consolidées).

Comme le montre la figure 2, chaque raidisseur 40 est intégré à la préforme 10 par engagement d'une de ses ailes 42 entre deux strates de la préforme 10, une incision étant formée sur une partie de l'épaisseur de celle-ci, pour permettre l'insertion de l'aile 42. De même, la strate de recouvrement 16 est interrompue au niveau de l'emplacement du raidisseur.

L'application, avec compactage éventuel, de la préforme 10 sur le conformateur 12 est réalisée au moyen de fils 50. Ceux-ci peuvent assurer également la liaison entre les raidisseurs 40 et la préforme 10, comme indiqué pour le mode de réalisation de la figure 1.

Dans cet exemple, chaque fil 50 court sur la face arrière du conformateur 12 et est implanté à travers les trous 14, ou au moins une partie de ceux-ci, la strate 18, la préforme 10 et la strate 16 en formant à chaque fois une boucle 52. Aux emplacements des raidisseurs 40, les fils 50 peuvent traverser également les ailes 52 de ceux-ci.

Une tige 54 est engagée dans l'extrémité supérieure de chaque boucle 52 afin de bloquer celle-ci en s'appuyant sur la strate de recouvrement 16. Les tiges 54 sont en un matériau céramique ou métallique résistant à l'agression des gaz et aux températures élevées utilisés lors de la densification de la préforme. Les tiges 54 ont pour fonction non seulement de bloquer les boucles 52 mais aussi de répartir à la surface de la strate 16 l'effort de tension exercé par les fils 50.

L'effort de tension exercé par les fils 50 peut être ajusté au niveau de chaque boucle 52 en faisant accomplir un nombre plus ou moins grand de tours à la tige 54, provoquant une torsion de la boucle 52, comme illustré par la figure 3.

La figure 4 montre une aiguille creuse 56 à travers laquelle le fil 50 est introduit et qui est engagée à travers les trous 14 du conformateur 12 et à travers l'ensemble constitué par la strate 18, la préforme 10, et la strate 16, ainsi qu'éventuellement les ailes 42 des raidisseurs, pour former les boucles 52. L'aiguille creuse 56 a une extrémité biseautée et est introduite dans la préforme en passant à travers les trous 14 en étant animée d'un mouvement alternatif (flèches F).

## Revendications

1. Procédé pour la fabrication de pièce en matériau composite thermostructural constituée par une préforme fibreuse densifiée par une matrice, comprenant l'élaboration de la préforme fibreuse,la conformation de la préforme pour la maintenir dans une forme voulue et avec un degré de compactage voulu, et la densification de la préforme par infiltration chimique en phase vapeur du matériau constitutif de la matrice,
caractérisé en ce que la conformation de la préforme (10) est réalisée par liage de celle-ci sur un conformateur rigide (12) au moyen de fils en un matériau réfractaire (30 ; 50) traversant la préforme (10) et passant à travers des trous (14) du conformateur (12) et restant implantés à travers la pièce obtenue

2. Procédé selon la revendication 1, caractérisé en ce que le liage est réalisé au moyen de fils en un matériau choisi parmi le carbone et les céramiques.

3. Procédé selon l'une quelconque des revendications 1 et 2, caractérisé en ce que, avant liage de la préforme (10), une strate de recouvrement (16) est disposée sur la face de la préforme opposée à celle tournée vers le conformateur.

4. Procédé selon la revendication 3, caractérisé en ce que la strate de recouvrement (16) est en tissu.

5. Procédé selon l'une quelconque des revendications 3 et 4, caractérisé en ce que la strate de recouvrement (16) est en un matériau ayant un coefficient de dilatation différent de celui du matériau constitutif de la préforme.

6. Procédé selon l'une quelconque des revendications 1 à 5, caractérisé en ce qu'une strate d'interposition (18) est disposée entre la préforme (10) et le conformateur (12).

7. Procédé selon l'une quelconque des revendications 1 à 6, caractérisé en ce que des éléments (20 ; 40) sont intégrés à la préforme (10) en étant reliés à celle-ci au moyen des fils de liage (30 ; 50).

8. Procédé selon la revendication 7 pour la fabrication d'une pièce en forme de panneau ou voile comprenant une préforme formée de strates superposées et munie de raidisseurs intégrés formés par des profilés constitués d'une texture fibreuse partiellement densifiée,
caractérisé en ce que chaque raidisseur (20 ; 40) est intégré à la préforme (10) par insertion d'au moins une aile (22 ; 42) du raidisseur entre deux strates de la préforme, à travers une incision formée sur une partie de l'épaisseur de celle-ci.

9. Procédé selon la revendication 8, caractérisé en ce que chaque raidisseur est relié à la préforme au moyen de fils de liage (30 ; 50) traversant l'ai le du raidisseur.

10. Procédé selon l'une quelconque des revendications 1 à 9, caractérisé en ce que chaque fil de liage (30) est introduit à travers les trous (14) du conformateur (12) et la préforme (10) en formant une couture.

11. procédé selon l'une quelconque des revendications 1 à 9, caractérisé en ce que chaque fil de liage (50) est introduit à travers les trous (14) du conformateur (12) et la préforme (10) en formant à chaque fois une boucle (52) qui est bloquée au moyen d'une tige (54) introduite à travers la boucle et s'appuyant sur la préforme.

12. Procédé selon la revendication 11, caractérisé en ce que la tension des fils de liage est réglée par torsion des boucles (52) au moyen des tiges (54).

13. Procédé selon l'une quelconque des revendications 10 et 11, caractérisé en ce que l'introduction des fils de liage (50) à travers les trous du conformateur (12) et la préforme (10) est réalisée au moyen d'une aiguille creuse (56).

## Claims

1. Process for the manufacture of a thermostructural composite material component consisting of a fibrous preform densified by a matrix, said process comprising the steps of producing said fibrous preform, configuring said preform so as to maintain said preform in a desired shape and with a desired degree of compacting, and densifying the preform by chemical vapor infiltration of a material constituting said matrix,
characterized in that said configuration of said preform (10) is achieved by linking said preform on a rigid shaping device (12) by means of threads in a refractory material (30; 50) traversing said preform (10) and passing through holes (14) in said shaping device (12) and remaining implanted through the obtained part.

2. Process according to claim 1, characterized in that said linkage is carried out by means of threads made of a material chosen among carbon and ceramics.

3. Process according to any one of claims 1 and 2, characterized in that, prior to the linking of the preform (10), a covering layer (16) is arranged over a surface of the preform opposite to that turned towards said shaping device.

4. Process according to claim 3, characterized in that the covering layer (16) is made of cloth.

5. Process according to any one of claims 3 and 4, characterized in that the covering layer (16) is made of a material having an expansion coefficient different from that of the material constituting the preform.

6. Process according to any one of claims 1 to 5, characterized in that an interposition layer (18) is arranged between the preform (10) and the shaping device (12).

7. Process according to any one of claims 1 to 6, characterized in that elements (20; 40) are integrated to the preform (10) by being linked thereto by means of the linking threads (30; 50).

8. Process according to claim 7, for producing a web-shaped component comprising a preform made up of a superposition of plies and fitted with integrated stiffeners consisting of profiled elements made of a partially densified fibrous texture, characterized in that each stiffener (20; 40) is integrated to the preform (10) by insertion of at least one wing section (22; 42) of the stiffener between two plies of the preform through an incision formed on a part of the thickness thereof.

9. Process according to claim 8, characterized in that each stiffener is joined to the preform by means of linking threads (30; 50) passing through a wing section of the stiffener.

10. Process according to any one of claims 1 to 9, characterized in that each linking thread (30) is inserted through holes (14) of the shaping device (12) and the preform (10) to form a seam.

11. Process according to any one of claims 1 to 9, characterized in that each linking thread (50) is introduced through the holes (14) in the shaping device (12) and the preform (10) to form each time a loop (52) which is blocked by means of a rod (54) inserted through the loop and pressing against the preform.

12. Process according to claim 11, characterized in that the tension of the linking threads is adjusted by twisting the loops (52) by means of the rods (54).

13. Process according to any one of claims 10 and 11, characterized in that the linking threads (50) are introduced through the holes of the shaping device (12) and of the preform (10) by means of a hollow needle (56).

## Patentansprüche

1. Verfahren zur Herstellung eines thermostrukturellen Verbundwerkstoffteiles, bestehend aus einem durch eine Matrix verdichteten faserigen Vorformling, umfassend die Herstellung des faserigen Vorformlings, die Formgebung des Vorformlings, um ihn in einer Sollform und einem Sollverdichtungsgrad zu halten, sowie die Verdichtung des Vorformlings durch chemische Infiltration in der Dampfphase des Grundmaterials der Matrix
**dadurch gekennzeichnet**, daß
die Formgebung des Vorformlings (10) durch dessen Verankerung auf einer starren Form (12) mittels Fäden (30; 50) aus einem hitzebeständigen Material durchgeführt wird, die den Vorformling (10) und Öffnungen (14) der Form (12) durchlaufen und durch das erhaltene Teil implantiert bleiben.

2. Verfahren nach Anspruch 1,
**dadurch gekennzeichnet**, daß
die Verankerung mittels Fäden aus einem Material erfolgt, das aus Kohlenstoff und Keramikmaterialien ausgewählt ist.

3. Verfahren nach Anspruch 1 oder 2,
**dadurch gekennzeichnet**, daß
vor der Verankerung des Vorformlings (10) eine Abdeckschicht (16) auf derjenigen Stirnfläche des Vorformlings angeordnet wird, die zu der der Form zugewandten entgegengesetzt ist.

4. Verfahren nach Anspruch 3,
**dadurch gekennzeichnet**, daß
die Abdeckschicht (16) ein Gewebe ist.

5. Verfahren nach Anspruch 3 oder 4,
**dadurch gekennzeichnet**, daß
die Abdeckschicht aus einem Material besteht, das einen Dehnungskoeffizienten hat, der von dem des Grundmaterials des Vorformlings verschieden ist.

6. Verfahren nach einem der Ansprüche 1 - 5,
**dadurch gekennzeichnet**, daß
eine Zwischenschicht (18) zwischen dem Vorformling (10) und der Form (12) angeordnet wird.

7. Verfahren nach einem der Ansprüche 1 - 6,
**dadurch gekennzeichnet**, daß
Elemente (20; 14) in den Vorformling (10) integriert werden, die mit diesem mittels der Verankerungsfäden (30; 50) verbunden werden.

8. Verfahren nach Anspruch 7,
zur Herstellung eines platten- oder folienförmigen Teils, umfassend einen Vorformling, der aus übereinandergelegten Schichten gebildet und mit integrierten Versteifungen versehen ist, die durch Profile gebildet sind, die aus einem teilweise verdichteten faserigen Gefüge bestehen,
**dadurch gekennzeichnet**, daß
jede Versteifung (20; 40) in den Vorformling (10) durch Einsetzen wenigstens eines Schenkels (22; 42) der Versteifung zwischen zwei Schichten des Vorformlings mittels eines in einem Teil dessen Dicke gebildeten Einschnittes integriert wird.

9. Verfahren nach Anspruch 8,
**dadurch gekennzeichnet**, daß
jede Versteifung mit dem Vorformling mittels der Verankerungsfäden (30; 50) verbunden wird, die den Schenkel der Versteifung durchsetzen.

10. Verfahren nach einem der Ansprüche 1 - 9,
**dadurch gekennzeichnet**, daß
jeder Verankerungsfaden (30) über Öffnungen (14) der Form (12) und den Vorformling (10) eingeführt wird, indem eine Naht gebildet wird.

11. Verfahren nach einem der Ansprüche 1 - 9,
**dadurch gekennzeichnet**, daß
jeder Verankerungsfaden (50) über die Öffnungen (14) der Form (12) und den Vorformling (10) dadurch eingeführt wird, daß jedes Mal eine Schlaufe (52) gebildet wird, die mittels eines Stiftes (54) festgelegt wird, der durch die Schlaufe geführt wird und sich auf dem Vorformling abstützt.

12. Verfahren nach Anspruch 11,
**dadurch gekennzeichnet**, daß
die Spannung der Verankerungsfäden durch Verdrehen der Schlaufen (52) mittels der Stifte (54) reguliert wird.

13. Verfahren nach Anspruch 10 oder 12,
**dadurch gekennzeichnet**, daß
das Einführen der Verankerungsfäden (50) über die Öffnungen der Form (12) und den Vorformling (10) mittels einer Hohlnadel (56) erfolgt.
